# EUROPÄISCHE PATENTSCHRIFT

(11) **EP 3 081 341 B1**
(45) Veröffentlichungstag und Bekanntmachung des Hinweises auf die Patenterteilung: **02.01.2019**
(21) Anmeldenummer: 16159670.5
(22) Anmeldetag: 10.03.2016
(51) Int. Cl.: B25F 3/00, B23B 45/00, B25B 21/02, B25D 17/00

(54) **WERKZEUGVORSATZ FÜR EINE HANDWERKZEUGMASCHINE**
TOOL ATTACHMENT FOR A MANUAL MACHINE TOOL
ENSEMBLE D'OUTILS POUR UNE MACHINE-OUTIL PORTATIVE

(30) Priorität: 14.04.2015 DE 102015206634
(43) Veröffentlichungstag der Anmeldung: 19.10.2016
(73) Patentinhaber: ROBERT BOSCH GMBH, 70442 Stuttgart (DE)
(72) Erfinder: Blum, Jens, 70794 Filderstadt (DE); Roehm, Heiko, 70176 Stuttgart (DE); Herr, Tobias, 70569 Stuttgart (DE)

(56) Entgegenhaltungen:
- CN-Y- 201 124 406
- DE-A1- 3 522 255
- DE-A1- 19 604 169
- DE-A1-102013 213 804
- DE-U1-202013 008 724
- US-A1- 2006 254 044

## Beschreibung

### Stand der Technik

Die vorliegende Erfindung betrifft einen Werkzeugvorsatz für eine Handwerkzeugmaschine, die ein Werkzeuggehäuse mit einer Befestigungsschnittstelle aufweist, mit einem Vorsatzgehäuse, an dem eine Verriegelungseinheit zur Verriegelung des Werkzeugvorsatzes an der Befestigungsschnittstelle der Handwerkzeugmaschine und eine Werkzeugaufnahme zur Aufnahme eines Einsatzwerkzeugs angeordnet sind. Darüber hinaus betrifft die vorliegende Erfindung ein Werkzeugsystem mit einer Handwerkzeugmaschine und einem derartigen Werkzeugvorsatz.

Die DE 10 2005 048 345 A1 offenbart eine nach Art eines austauschbaren Werkzeugvorsatzes ausgebildete Handwerkzeugmaschinenzusatzeinheit mit einer Schlagwerkeinheit und einer Koppeleinheit, die zum Koppeln der Schlagwerkeinheit an eine Handwerkzeugmaschine mit einer korrespondierend ausgestalteten Schnittstelle vorgesehen ist. Die Schlagwerkeinheit weist ein Drehschlagwerk auf und ist mit einem zugeordneten Einsatzwerkzeug verbindbar. Im Betrieb des mit einer Handwerkzeugmaschine gekoppelten Werkzeugvorsatzes vollzieht das Einsatzwerkzeug bei aktiviertem Drehschlagwerk eine kombinierte Dreh- und Schlagbewegung.

Das Dokument US 2006/254044 A1 offenbart einen Werkzeugvorsatz mit einem Schlagwerk.

### Offenbarung der Erfindung

Die vorliegende Erfindung stellt einen Werkzeugvorsatz für eine Handwerkzeugmaschine, die ein Werkzeuggehäuse mit einer Befestigungsschnittstelle aufweist, bereit. Der Werkzeugvorsatz hat ein Vorsatzgehäuse, an dem eine Verriegelungseinheit zur Verriegelung des Werkzeugvorsatzes an der Befestigungsschnittstelle der Handwerkzeugmaschine und eine Werkzeugaufnahme zur Aufnahme eines Einsatzwerkzeugs angeordnet sind. In dem Vorsatzgehäuse ist ein Schlagwerk angeordnet, das dazu ausgebildet ist, ein in der Werkzeugaufnahme angeordnetes Einsatzwerkzeug im Schlagbetrieb des Werkzeugvorsatzes mit in axialer Richtung zur Werkzeugaufnahme ausgeführten Schlägen zu beaufschlagen, wobei die Werkzeugaufnahme zumindest im Schlagbetrieb verdrehgesichert im Vorsatzgehäuse lagefixiert ist. Die Erfindung ermöglicht somit aufgrund der im Schlagbetrieb verhinderten Drehbewegung des Einsatzwerkzeugs einen professionellen Meißelbetrieb auch in harten Medien, wie Beton oder Stein.

Bevorzugt ist dem Schlagwerk ein koaxial zur Werkzeugaufnahme angeordnetes Antriebsglied zugeordnet. Die Erfindung ermöglicht somit die Bereitstellung eines kompakten Schlagwerks mit reduzierten räumlichen Abmessungen.

Vorzugsweise weist das Antriebsglied zumindest abschnittsweise einen sechskantigen Außenumfang auf. Somit können die möglichen Einsatzbereiche und Arbeitsbedingungen, in denen der Werkzeugvorsatz Anwendung finden kann, erweitert werden.

Erfindungsgemäß weist die Werkzeugaufnahme ein um eine zugeordnete Drehachse drehbares Abtriebsglied auf, wobei die Drehachse mit einer Antriebsachse des Schlagwerks zusammenfällt. Hierdurch ist eine radial besonders kompakte, sogenannte In-Line-Bauweise des Werkzeugvorsatzes mit integriertem Schlagwerk gegeben.

Das Schlagwerk ist bevorzugt zum unmittelbar schlagenden Antrieb des der Werkzeugaufnahme zugeordneten Abtriebsglieds im Schlagbetrieb des Werkzeugvorsatzes ausgebildet, wobei das Abtriebsglied dazu ausgebildet ist, in axialer Richtung zur Werkzeugaufnahme ausgeführte Schläge unmittelbar auf ein in der Werkzeugaufnahme angeordnetes Einsatzwerkzeug zu übertragen. Hierdurch kann ein stabiles und robustes Schlagwerk bereitgestellt werden, bei dem auf einfache Art und Weise eine ausreichend hohe Schlagenergie erzeugt werden kann, die intensive Meißelarbeiten auch in harten Medien, wie etwa Stein oder Beton erlaubt.

Bevorzugt weist das Schlagwerk einen mit einem Federelement federbeaufschlagten Schlagkörper auf, der über eine Kugelführung mit einem zugeordneten Federspannglied gekoppelt ist. Die Erfindung ermöglicht somit die Bereitstellung eines Schlagwerks mit einem zuverlässigen und unkomplizierten Aufbau.

Gemäß einer Ausführungsform weist das Schlagwerk eine betätigbare Einrückkupplung zur Aktivierung des Schlagbetriebs des Schlagwerks auf. Die Erfindung ermöglicht somit die Bereitstellung eines Schlagwerks, bei dem ein entsprechender Schlagbetrieb auf einfache Art und Weise aktiviert und deaktiviert werden kann.

Vorzugsweise ist das Abtriebsglied mittels eines Federglieds in einer von der Verriegelungseinheit wegweisenden Richtung axial vorgespannt. Hierdurch erfolgt bei nur geringfügig axial belastetem oder völlig unbelastetem Einsatzwerkzeug eine selbsttätige Rückstellung vom Schlagbetrieb in den Leerlaufbetrieb. Dieser Fall tritt ein, wenn die Handwerkzeugmaschine vom Benutzer von dem zu bearbeitenden Werkstück abgehoben wird.

Bevorzugt ist die Einrückkupplung dazu ausgebildet, bei einer Betätigung entgegen der vom Federglied ausgeübten Kraftwirkung einen Antrieb des Federspannglieds zum periodischen Spannen und Freigeben des Federelements zu ermöglichen. Somit kann eine sichere und zuverlässige Aktivierung des Schlagbetriebs des Schlagwerks, insbesondere durch das Andrücken des Einsatzwerkzeugs gegen ein zu bearbeitendes Werkstück, ermöglicht werden.

Erfindungsgemäß weist das Abtriebsglied einen Führungsabschnitt auf, der zumindest abschnittsweise von einem dem Vorsatzgehäuse zugeordneten Werkzeugaufnahmehalter umschlossen ist, wobei zwischen dem Führungsabschnitt und dem Werkzeugaufnahmehalter zumindest abschnittsweise eine Eingriffskontur zur Schaffung einer drehfesten Kopplung zwischen dem Werkzeugaufnahmehalter und dem Führungsabschnitt zumindest im Schlagbetrieb des Werkzeugvorsatzes vorgesehen ist. Hierdurch lässt sich ein Verdrehen eines in der Werkzeugaufnahme angeordneten Einsatzwerkzeugs relativ zum Vorsatzgehäuse zumindest im Schlagbetrieb des Werkzeugvorsatzes sicher und zuverlässig verhindern.

Bevorzugt weist das Schlagwerk einen mit einem Federelement federbeaufschlagten Schlagkörper auf, der mit einem zugeordneten Federspannglied gekoppelt ist, wobei in dem Vorsatzgehäuse ein Getriebe angeordnet ist, das dazu ausgebildet ist, eine Drehzahl des Federspannglieds in Relation zu einer Drehzahl des Antriebsglieds zu erhöhen. Somit kann die zum Meißeln in hartem Gestein oder Beton erforderliche Schlagkraft des Schlagwerks auf einfache Art und Weise bereitgestellt werden.

Gemäß einer Ausführungsform ist an dem Vorsatzgehäuse ein Zusatzhandgriff und/oder eine Befestigungshilfe befestigbar. Hierdurch kann auf einfache Art und Weise eine beidhändige Bedienbarkeit ermöglicht werden. Mittels der Befestigungshilfe kann der Werkzeugvorsatz bei zeitweisem Nichtgebrauch z.B. an einem Kleidungsstück, wie beispielsweise einem Gürtel oder einer Tasche, befestigt werden und bleibt dennoch kurzfristig griffbereit.

Bevorzugt ist die Werkzeugaufnahme zur Aufnahme von SDS-plus-, SDS-Quick- und/oder HEX-Einsatzwerkzeugen ausgebildet. Die Erfindung ermöglicht somit die Bereitstellung eines universellen Werkzeugvorsatzes, der mit einer Vielzahl unterschiedlicher Einsatzwerkzeugtypen verwendbar ist und somit in einer Vielzahl verschiedener Einsatzbedingungen Anwendung finden kann.

Vorzugsweise ist das Einsatzwerkzeug als ein Meißel ausgebildet. Infolgedessen können Meißelarbeiten in größerem Umfang und insbesondere in harten Medien, wie z. B. Beton oder Stein, problemlos ausgeführt werden.

Darüber hinaus stellt die vorliegende ein Werkzeugsystem mit einer Handwerkzeugmaschine, die ein Werkzeuggehäuse mit einer Befestigungsschnittstelle aufweist, und mit einem austauschbaren Werkzeugvorsatz bereit. Der austauschbare Werkzeugvorsatz weist ein Vorsatzgehäuse auf, an dem eine Verriegelungseinheit zur Verriegelung des Werkzeugvorsatzes an der Befestigungsschnittstelle der Handwerkzeugmaschine und eine Werkzeugaufnahme zur Aufnahme eines Einsatzwerkzeugs angeordnet sind. In dem Vorsatzgehäuse ist ein Schlagwerk angeordnet, das dazu ausgebildet ist, ein in der Werkzeugaufnahme angeordnetes Einsatzwerkzeug im Schlagbetrieb des Werkzeugvorsatzes mit in axialer Richtung zur Werkzeugaufnahme ausgeführten Schlägen zu beaufschlagen, wobei die Werkzeugaufnahme zumindest im Schlagbetrieb verdrehgesichert im Vorsatzgehäuse lagefixiert ist.

Somit ermöglicht das Werkzeugsystem bestehend aus der Handwerkzeugmaschine mit dem austauschbaren Werkzeugvorsatz intensive Meißelarbeiten in härteren Medien, wie z. B. Beton oder Stein.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine schematische Ansicht einer Handwerkzeugmaschine mit einer nach Art eines Bithalters ausgebildeten Werkzeugaufnahme und einer Befestigungsschnittstelle,
- Fig. 2: eine perspektivische Ansicht der Werkzeugaufnahme und der Befestigungsschnittstelle der Handwerkzeugmaschine von Fig. 1,
- Fig. 3: eine Seitenansicht der Handwerkzeugmaschine von Fig. 1 mit einem als Meißelvorsatz ausgebildeten, austauschbaren Werkzeugvorsatz und einem Zusatzhandgriff,
- Fig. 4: einen Längsschnitt des Werkzeugvorsatzes von Fig. 3, und
- Fig. 5: eine Draufsicht auf eine Vorsatzschnittstelle des Werkzeugvorsatzes von Fig. 4.

### Beschreibung der Ausführungsbeispiele

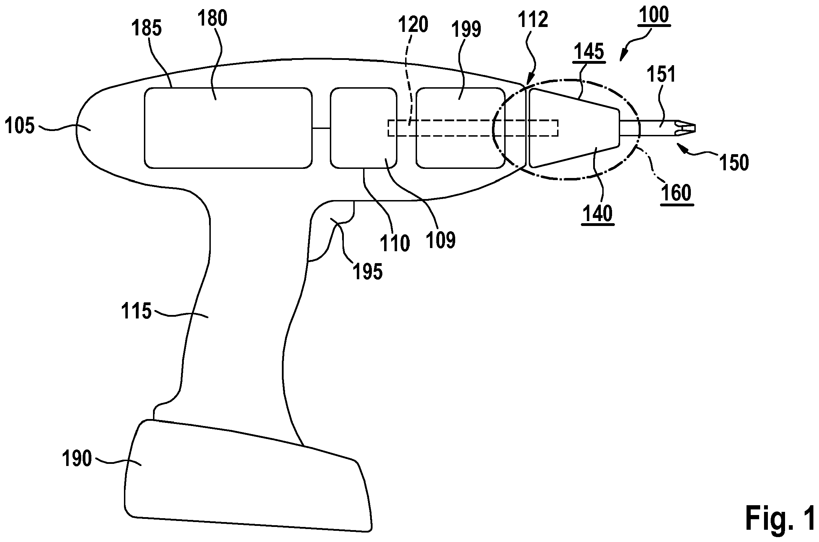

Fig. 1 zeigt eine beispielhafte Handwerkzeugmaschine 100, die ein Werkzeuggehäuse 105 mit einem Handgriff 115 aufweist. Gemäß einer Ausführungsform ist die Handwerkzeugmaschine 100 zur netzunabhängigen Stromversorgung mechanisch und elektrisch mit einem Akkupack 190 verbindbar. In Fig. 1 ist die Handwerkzeugmaschine 100 beispielhaft als ein Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen Anwendung finden kann, bei denen ein Werkzeug in Drehungen versetzt wird, unabhängig davon, ob die Handwerkzeugmaschine netzabhängig oder netzunabhängig mit dem Akkupack 190 betreibbar ist, z.B. bei einem Schrauber oder Akku-Schrauber, usw.

In dem Werkzeuggehäuse 105 sind bevorzugt zumindest ein von dem Akkupack 190 mit Strom versorgter, elektrischer Antriebsmotor 180 und ein Getriebe 109 angeordnet. Der Antriebsmotor 180 ist z. B. über einen Handschalter 195 ein- und ausschaltbar und kann ein beliebiger Motortyp sein, z.B. ein elektronisch kommutierter Motor oder ein Gleichstrommotor. Das Getriebe 109 kann z.B. nach Art eines Untersetzungsgetriebes ausgebildet sein, das beispielsweise mit einem mit verschiedenen Planetenstufen ausgebildeten Planetengetriebe realisierbar ist, dem optional eine Drehmomentkupplung 199 zugeordnet ist. Die Funktionsweise und der Aufbau eines geeigneten Antriebsmotors und eines geeigneten Getriebes sowie einer geeigneten Drehmomentkupplung und deren Funktionsweisen sind dem Fachmann hinreichend bekannt, sodass hier zwecks Knappheit der Beschreibung und Einfachheit der Zeichnungen auf eine Abbildung sowie detaillierte Beschreibung hiervon verzichtet wird.

Das Getriebe 109 ist illustrativ in einem Getriebegehäuse 110 und der Antriebsmotor 180 in einem Motorgehäuse 185 angeordnet, wobei das Getriebegehäuse 110 und das Motorgehäuse 185 in dem Werkzeuggehäuse 105 angeordnet sind. Der Antriebsmotor 180 ist über das Getriebe 109 mit einer Antriebswelle 120, z.B. einer Antriebsspindel, verbunden. Im Betrieb der Handwerkzeugmaschine 100 treibt der Motor 180 die Antriebswelle 120 über das Getriebe 109 drehend an. Gemäß der hier gezeigten Ausführungsform ist der Handwerkzeugmaschine 100 eine Werkzeugaufnahme 140 zur Aufnahme eines Einsatzwerkzeugs 150 zugeordnet. Die Werkzeugaufnahme 140 ist hier lediglich exemplarisch als ein Bithalter 145 zur Aufnahme eines Schrauberbits 151 ausgeführt. Die Werkzeugaufnahme 140 kann integral an die von dem Antriebsmotor 180 über das Getriebe 109 antreibbare Antriebswelle 120 angeformt sein oder aufsatzförmig mit dieser verbunden sein.

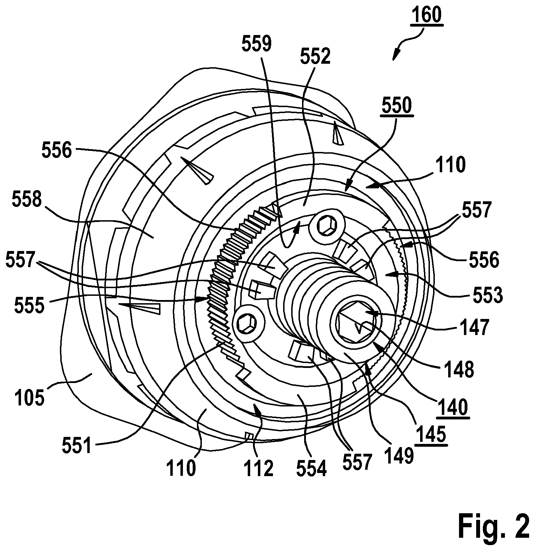

Fig. 2 zeigt den vergrößerten Ausschnitt 160 der Handwerkzeugmaschine 100 von Fig. 1 mit der Werkzeugaufnahme 140, die beispielhaft den Bithalter 145 aufweist, der hier illustrativ mit einer Sechskant-Innenaufnahme 147 und einem der Sechskant-Innenaufnahme 147 zugeordneten Verriegelungselement 148 für das Schrauberbit 151 von Fig. 1 versehen ist, sowie mit einer nachfolgend auch als "Maschinenschnittstelle" bezeichneten Befestigungsschnittstelle 550. Diese ist illustrativ im Bereich des Bithalters 145 an dem Werkzeuggehäuse 105 und/oder am Getriebegehäuse 110 der Handwerkzeugmaschine 100 von Fig. 1 axial und radial unbeweglich sowie verdrehgesichert befestigt. Es wird jedoch darauf hingewiesen, dass die Maschinenschnittstelle 550 lediglich beispielhaft als ein separates Bauteil ausgebildet ist und alternativ hierzu auch einstückig mit dem Werkzeuggehäuse 105 und/oder dem Getriebegehäuse 110 ausgebildet sein kann.

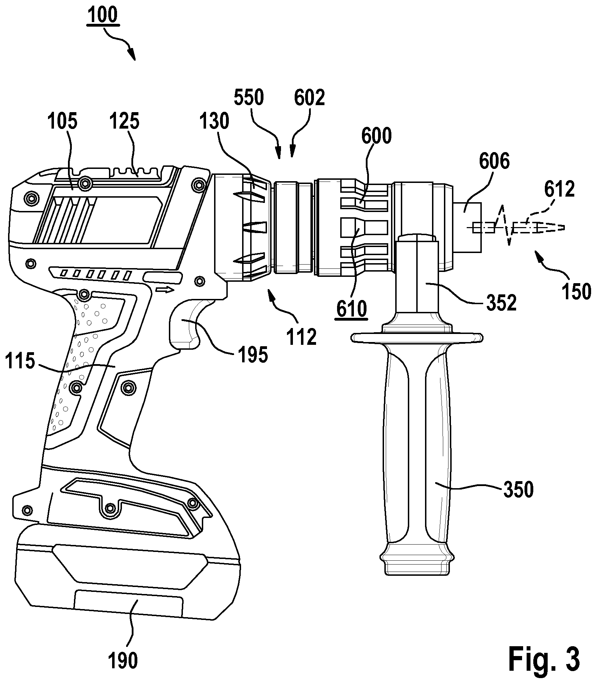

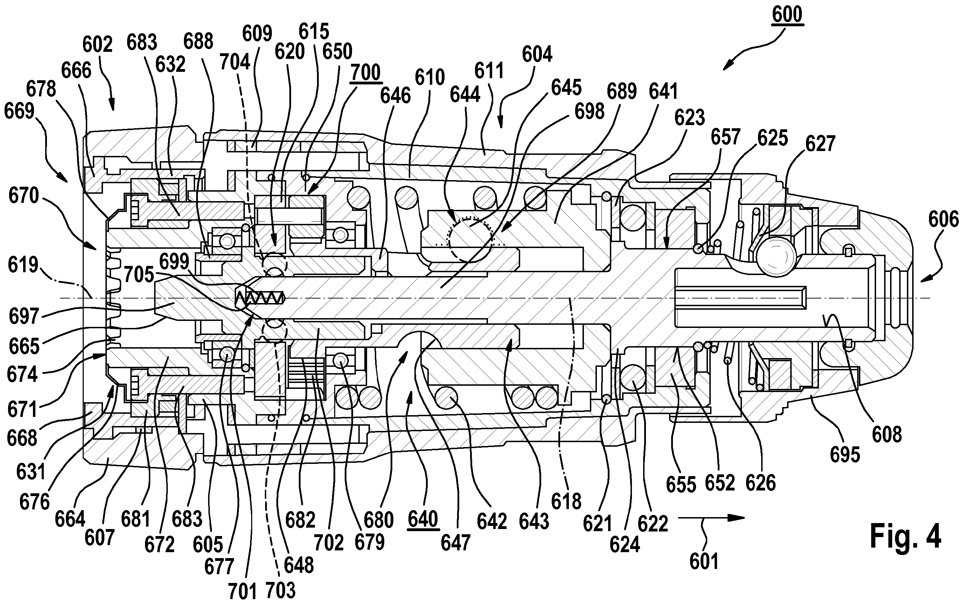

Die Maschinenschnittstelle 550 dient zur bevorzugt verdrehgesicherten Befestigung eines zugeordneten Werkzeugvorsatzes (600 in Fig. 3, 4) und weist illustrativ ein an der Stirnseite 112 des Werkzeuggehäuses 105 und/oder am Getriebegehäuse 110 verdrehgesichert befestigtes Befestigungselement 551 auf. Dieses ist beispielhaft zumindest abschnittsweise hülsen- bzw. ringförmig ausgebildet und im Bereich einer an der Stirnseite 112 am Werkzeuggehäuse 105 ringförmig angeordneten und der optionalen Drehmomentkupplung 199 von Fig. 1 zugeordneten Drehmomenteinstellhülse 558 mit geeigneten Befestigungsgliedern, z.B. Schrauben oder Nieten, befestigt, kann alternativ hierzu aber auch einstückig mit dem Werkzeuggehäuse 105 und/oder dem Getriebegehäuse 110 ausgebildet sein. Das Befestigungselement 551 ummantelt den Bithalter 145 bevorzugt zumindest abschnittsweise mit einer vorgegebenen radialen Beabstandung, um eine axiale Verschiebung der Verriegelungshülse 149 des Bithalters 145 im Inneren des Befestigungselements 551 zu ermöglichen.

Das Befestigungselement 551 weist an seinem Außenumfang zumindest ein Sperrelement 555 und mindestens zwei Halteglieder 552, 554 auf. Das Sperrelement 555 weist bevorzugt mindestens eine Sperrverzahnung 556 auf und die mindestens zwei Halteglieder 552, 554 sind beispielhaft nach Art von Bajonetten zur Ausbildung einer Bajonett-Verbindung ausgebildet. Es wird jedoch darauf hingewiesen, dass die Beschreibung einer derartigen Bajonett-Verbindung lediglich beispielhaften Charakter hat und nicht als Einschränkung der Erfindung dient. Vielmehr können auch alternative Befestigungsmöglichkeiten bei der Maschinenschnittstelle 550 Anwendung finden, bei denen ein entsprechender Werkzeugvorsatz (600 in Fig. 4) über eine Drehbewegung an der Maschinenschnittstelle 550 befestigbar ist, z.B. eine s.g. Drahtbügelverriegelung, usw.

Illustrativ ist an der Maschinenschnittstelle 550 eine zumindest abschnittsweise konusförmige Zentrierhilfe 553 zur axialen Zentrierung einer Verriegelungseinheit (602 in Fig. 4) eines zugeordneten Werkzeugvorsatzes (600 in Fig. 4) vorgesehen, wobei das Befestigungselement 551 dazu ausgebildet ist, die axiale Zentrierung des zugeordneten Werkzeugvorsatzes (600 in Fig. 4) an dem Werkzeuggehäuse 105 und/oder dem Getriebegehäuse 110 zu ermöglichen. Hierzu ist am Innenumfang des Befestigungselements 551 eine beispielhaft ringförmige, zumindest abschnittsweise trichterförmige Zentrierfläche 559 zur Ausbildung der Zentrierhilfe 553 vorgesehen.

Es wird jedoch darauf hingewiesen, dass die Zentrierfläche 559 nur beispielhaft trichterförmig ausgebildet ist und nicht als Einschränkung der Erfindung zu verstehen ist. Vielmehr ist auch eine kegelförmige Ausgestaltung an einem zusätzlichen Zentrierring realisierbar. Dementsprechend repräsentiert eine Bezugnahme auf den Terminus "konusförmig" im Kontext der vorliegenden Erfindung sowohl eine Bezugnahme auf eine kegelförmige, als auch auf eine trichterförmige Ausgestaltung eines entsprechenden Bauteils. Darüber hinaus kann die Zentrierhilfe 553 anstelle einer einzelnen ring- und trichterförmigen Zentrierfläche 559 mehrere konusförmige Bogenabschnitte aufweisen, usw.

Des Weiteren weist das Befestigungselement 551 mindestens ein und beispielhaft drei optionale Winkeleinstellglieder 557 auf. Diese dienen z.B. bei einer Befestigung eines nach Art eines Winkel- oder Exzentervorsatzes ausgebildeten Werkzeugvorsatzes an der Maschinenschnittstelle 550 zur Vorgabe einer vorgegebenen Winkelposition.

Fig. 3 zeigt die Handwerkzeugmaschine 100 von Fig. 1 mit einem austauschbaren Werkzeugvorsatz 600 und einem Zusatzhandgriff 350. Die Handwerkzeugmaschine 100 weist illustrativ zusätzlich zu den oben beschriebenen Komponenten einerseits am Werkzeuggehäuse 105 einen Schiebeschalter 125 auf, der dazu dient, einen Gangwechsel des Getriebes 109 von Fig. 1 zu ermöglichen, und andererseits einen bevorzugt gummierten Drehring 130 zur Einstellung eines Drehmomentwerts, ab dem die optionale Drehmomentkupplung 199 von Fig. 1 im Betrieb anspricht.

Gemäß einer Ausführungsform ist an der im Bereich der Stirnseite 112 des Werkzeuggehäuses 105 vorgesehenen Befestigungsschnittstelle 550 der bevorzugt als s.g. "Inline-Schlagvorsatz" bzw. "Inline-Meißelvorsatz" ausgeführte Werkzeugvorsatz 600 mittels einer an einem Vorsatzgehäuse 610 des Werkvorsatzes 600 ausgebildeten Vorsatzschnittstelle 602 befestigt. In einer Werkzeugaufnahme 606 des Werkzeugvorsatzes 600 ist das Einsatzwerkzeug 150 von Fig. 1 aufgenommen, das hier exemplarisch ein Meißel 612 ist. An dem Vorsatzgehäuse 610 sind ferner ein Zusatzhandgriff 350 sowie eine Befestigungshilfe 352 vorgesehen. Der Zusatzhandgriff 350 erlaubt eine zweihändige Bedienung der Handwerkzeugmaschine 100 mit dem daran befestigten Werkzeugvorsatz 600, während die Befestigungshilfe 352 zur zeitweisen Befestigung an einem Kleidungsstück, wie z.B. einem Gürtel oder einer Hosen- oder Jackentasche, dient. Zu diesem Zweck kann der Zusatzhandgriff 350 von der Befestigungshilfe 352 im Bedarfsfall getrennt werden.

Fig. 4 zeigt den Werkzeugvorsatz 600 von Fig. 3, der beispielhaft eine nachfolgend zwecks Klarheit der Beschreibung als "Vorsatzschnittstelle" bezeichnete Befestigungsschnittstelle 602, eine nachfolgend auch als "Antriebsabschnitt" bezeichnete Antriebseinheit 604 sowie eine nachfolgend auch als "Aufnahmeabschnitt" bezeichnete Werkzeugaufnahme 606 aufweist. Diese weist hier illustrativ eine mit einer Verriegelungs- bzw. Betätigungshülse 695 versehene SDS-plus- oder SDS-Quick-Aufnahme 608 zur bevorzugten Aufnahme des Meißels 612 von Fig. 3 auf, kann aber auch eine beliebige andere Aufnahme aufweisen, z.B. eine HEX-Aufnahme usw. Die Antriebseinheit 604 weist beispielhaft ein nach Art eines mechanischen Schlagwerks ausgebildetes Schlagwerk 640 auf. Deshalb wird der Werkzeugvorsatz 600 zur Vereinfachung der Beschreibung im weiteren Fortgang der Beschreibung auch als der "Schlagwerkvorsatz 600" bezeichnet.

Der Antriebsabschnitt 604 weist beispielhaft ein Vorsatzgehäuse 610 auf, das bevorzugt einen äußeren, z.B. gummierten Griffbereich 611 aufweist. In dem Vorsatzgehäuse 610 ist ein dem Schlagwerk 640 zugeordnetes, drehend antreibbares Antriebsglied 697 in einem Lagerelement 677 drehbeweglich gelagert. Das Antriebsglied 697 ist bevorzugt koaxial zu dem Aufnahmeabschnitt 606 angeordnet und dient zum Antrieb eines Abtriebsglieds 698 über ein zugeordnetes, bevorzugt aktivierbares Getriebe 700 und das Schlagwerk 640, wobei das Abtriebsglied 698 erfindungsgemäß zumindest in einem Schlagbetrieb verdrehgesichert innerhalb des Vorsatzgehäuses 610 gelagert ist. Zu diesem Zweck weist das Abtriebsglied 698 einen Führungsabschnitt 652 auf, der zumindest abschnittsweise von einem dem Vorsatzgehäuse 610 zugeordneten Werkzeugaufnahmehalter 655 umschlossen ist. Zwischen dem Führungsabschnitt 652 und dem Werkzeugaufnahmehalter 655 ist zumindest abschnittsweise eine Eingriffskontur 657 zur Schaffung einer zumindest im Schlagbetrieb des Werkzeugvorsatzes 600 drehfesten Kopplung zwischen dem Werkzeugaufnahmehalter 655 und dem im Vorsatzgehäuse 610 befestigten Führungsabschnitt 652 vorgesehen. An dem Abtriebsglied 698 ist darüber hinaus im Bereich des Werkzeugaufnahmehalters 655 an dessen, dem Schlagwerk 640 zugewandter axialer Seite ein Ringflansch 624 ausgebildet, um ein Herausrutschen des Abtriebsglieds 698 aus dem Vorsatzgehäuse 610 zu verhindern. An der vom Schlagwerk 640 abgewandten axialen Seite des Werkzeugaufnahmehalters 655 liegt ein Stützring 625 zum Abstützen eines Federelements 626 an, das gegen ein im Aufnahmeabschnitt 606 bzw. in dessen Verriegelungs- bzw. Betätigungshülse 695 angeordnetes, tellerförmiges Beaufschlagungsglied 627 anliegt. Das nach Art einer kegelstumpfförmigen Druckfeder ausgebildete Federelement 626 spannt die Verriegelungs- bzw. Betätigungshülse 695 über das Beaufschlagungsglied 627 in eine vom Vorsatzgehäuse 610 wegweisende axiale Richtung vor, wie mit einem Pfeil 601 angedeutet.

Bevorzugt ist das Abtriebsglied 698 eine dem Aufnahmeabschnitt 606 zugeordnete, um eine Drehachse 619 drehbare Abtriebsspindel, wobei die Drehachse 619 mit einer entsprechenden Antriebsachse 618 des Schlagwerks 640 bzw. einer entsprechenden Drehachse des Antriebsglieds 697 zusammenfällt. Dementsprechend ist das Schlagwerk 640 nach Art eines s.g. "Inline-Schlagwerks" zum unmittelbaren schlagenden Antrieb des Abtriebsglieds 698 bzw. der Abtriebsspindel im Schlagbetrieb des Schlagwerkvorsatzes 600 ausgebildet, wobei das Abtriebsglied 698 bzw. die Abtriebsspindel dazu ausgebildet ist, entsprechende Schlagimpulse unmittelbar auf das darin angeordnete Einsatzwerkzeug 150 bzw. den Meißel 612 von Fig. 3 zu übertragen. Zur Dämpfung der Schlagimpulse bzw. einer hierdurch entstehenden Rückkopplung auf das Vorsatzgehäuse 610 sowie zur Dämpfung von durch den Aufnahmeabschnitt 606 auf das Vorsatzgehäuse 610 übertragenen Vibrationen ist im Vorsatzgehäuse 610 ein Dämpfungsglied 622 vorgesehen, das über ein vorzugsweise als Sicherungsring ausgebildetes Sicherungselement 621 sowie einen kreisringförmigen Unterleger 623 im Bereich des Werkzeugaufnahmehalters 655 fixiert ist.

Das Schlagwerk 640 weist einen mittels eines Federelements 642 beaufschlagten Schlagkörper 641 auf, der über eine Kugelführung 680 und ein kugelförmiges Spannelement 645 mit einem zugeordneten Federspannglied 646 gekoppelt ist. Das Federelement 642 ist bevorzugt als zylindrische Druckfeder ausgebildet. Der Schlagkörper 641 ist bevorzugt zur Ausführung von axial ausgerichteten Schlägen, d.h. Schlägen in Richtung des Pfeils 601, gegen das Abtriebsglied 698 bzw. die Abtriebsspindel vorgesehen. Das Federspannglied 646 ist beispielhaft hülsenförmig ausgebildet und mit seinem vorderen, dem Schlagkörper 641 zugewandten axialen Ende 643 in diesem aufgenommen, wobei im Bereich zwischen dem Federspannglied 646 und dem Schlagkörper 641 das kugelförmige Spannelement 645 angeordnet ist. Dieses ist einerseits in einer radialen Ausnehmung 644 des Schlagkörpers 641 angeordnet und kann andererseits in einer am Innenumfang des Federspannglieds 646 ausgebildeten Steuerkurve 647 abrollen. Die in Fig. 4 gezeigte Position des kugelförmigen Spannelements 645 entspricht illustrativ einer entspannten Ruheposition 689 des Schlagwerks 640, in der nach der Ausführung eines axialen Schlags des Schlagkörpers 641 gegen das Abtriebsglied 698 das Federelement 642 maximal expandiert ist und der Schlagkörper 641 am Ringflansch 624 des Abtriebsglieds 698 anliegt. Nach dem Vollzug jedes axialen Schlags erfolgt durch das Freigeben des kugelförmigen Spannelements 645 und das hierdurch bewirkte erneute Spannen bzw. Komprimieren des Federelements 642 mittels des rotierenden Federspannglieds 646 ein weiterer axialer Schlag.

An seinem vom Schlagkörper 641 abgewandten axialen Ende nimmt das Federspannglied 646 das Antriebsglied 697 auf, wobei das Federspannglied 646 drehbeweglich und somit unabhängig vom Antriebsglied 697 auf diesem angeordnet ist. Zum Antrieb des Federspannglieds 646 dient bevorzugt das aktivierbare Getriebe 700, das zumindest im Schlagbetrieb des Schlagwerks 640 aktivierbar ist und hier illustrativ nach Art eines einstufigen Planetengetriebes mit einem vom Antriebsglied 697 antreibbaren Planetenträger 615 und mehreren Planetenrädern 682 ausgebildet wird. Diese sind über eine Drehmitnahmeverzahnung 648 antriebstechnisch mit dem Federspannglied 646 gekoppelt und in einem zugeordneten Hohlrad 650 angeordnet. Dieses ist gehäusefest und verdrehgesichert in dem Vorsatzgehäuse 610 angeordnet und hat ein dem Schlagkörper 641 zugewandtes axiales Ende, in dem ein weiteres Lagerelement 679, z.B. ein Wälzlager, zur drehbeweglichen Lagerung des Federspannglieds 646 bevorzugt radial und axial unbeweglich angeordnet ist, sowie ein vom Schlagkörper 641 abgewandtes und der Vorsatzschnittstelle 602 zugewandtes axiales Ende, an dem die Planetenräder 682 angreifen.

Zur Aktivierung des Schlagbetriebs des Schlagwerks 640 ist eine bevorzugt durch eine axiale Verschiebung des Abtriebsglieds 698 bzw. der Abtriebsspindel entgegen der Federkraft eines Federglieds 699 betätigbare Einrückkupplung 620 vorgesehen. Hierzu ist das Abtriebsglied 698 mittels des bevorzugt als Druckfeder ausgebildeten Federglieds 699 in einer von einer Verriegelungseinheit 669 wegweisenden Richtung bzw. in Richtung des Pfeils 601 axial vorgespannt. Die Einrückkupplung 620 ist dazu ausgebildet, bei einer Betätigung entgegen der vom Federglied 699 ausgeübten Kraftwirkung einen Antrieb des Federspannglieds 646 zum periodischen Spannen und Freigeben des Federelements 642, d.h. die Aktivierung des Schlagbetriebs zu ermöglichen. Um die Betätigung der Einrückkupplung 620 durch axiales Einschieben des Abtriebsglieds 698 - z. B. durch das Andrücken eines in der Werkzeugaufnahme 606 aufgenommenen Einsatzwerkzeugs gegen ein zu bearbeitendes Werkstück - zu erreichen, hat diese bevorzugt ein ungefähr konusförmiges axiales Ende 701, das in einer näherungsweise zylindrischen Bohrung 702 des Antriebsglied 697 aufgenommen ist. Mittels des konusförmigen axialen Endes 701 werden nach Überwindung der vom Federglied 699 aufgebrachten Federkraft mindestens zwei kugelförmige Kupplungskörper 703, 704 zum Einschalten des Schlagbetriebs radial soweit nach außen gedrückt, dass eine Formschlussverbindung zwischen dem Antriebsglied 697 und dem Planetenträger 615 des Getriebes 700 hergestellt wird. Das Federglied 699 ist zur Lagesicherung bzw. zur Führung abschnittsweise in einer kleinen Bohrung 705 in dem freien axialen Ende 701 des Abtriebsglieds 698 bzw. der Abtriebsspindel aufgenommen und stützt sich an einen nicht bezeichneten Bohrungsgrund der Bohrung 702 des Antriebsglieds 697 ab.

Die Funktionsweise des Schlagwerks 640 sowie weitere Einzelheiten zu Bauteilen hiervon sind beispielsweise in der DE 10 2013 208 882.5 beschrieben, deren Offenbarung explizit in die vorliegende Beschreibung einbezogen wird, sodass hier zwecks Knappheit der Beschreibung auf eine eingehende Beschreibung hiervon verzichtet werden kann.

Ein vom Antriebsabschnitt 604 abgewandtes, freies axiales Ende des Antriebsglieds 697 weist zumindest abschnittsweise einen sechskantigen Außenumfang 665 auf. Koaxial innerhalb der Verriegelungseinheit 669 ist ein zumindest bereichsweise hülsen- bzw. rohrförmig ausgebildetes Winkeleinstellelement 672 angeordnet, durch das das Antriebsglied 697 zumindest abschnittsweise hindurchgreift. Dieses Winkeleinstellelement 672 ist bevorzugt starr, d.h. axial und radial unbeweglich, mit dem Vorsatzgehäuse 610 verbunden und/oder einstückig mit diesem ausgebildet. Illustrativ hat das Winkeleinstellelement 672 an seinem dem Antriebsabschnitt 604 zugewandten axialen Ende einen äußeren Ringkragen 609, der axial und radial unbeweglich im Vorsatzgehäuse 610 angeordnet ist, z.B. durch Einpressen oder Verklemmen, und axial gegen das Hohlrad 650 des Getriebes 700 anliegt. Dieser Ringkragen 609 ist an seinem Innenumfang bevorzugt als eine Aufnahme für den Planetenträger 615 ausgebildet. An seinem anderen axialen Ende 671 ist eine stirnseitige Winkeleinstellverzahnung 674 vorgesehen.

Weiterhin ist an dem Antriebsglied 697 ein Betätigungsglied 688 ausgebildet, das das Antriebsglied 697 zumindest abschnittsweise hülsenförmig umgreift und das zur axialen Beaufschlagung der Verriegelungshülse 149 von Fig. 2 beim An- oder Abkoppeln des Werkzeugvorsatzes 600 dient. Alternativ hierzu können das Antriebsglied 697 und das Betätigungsglied 688 auch zwei- oder mehrstückig ausgebildet sein. Das Betätigungsglied 688 ist beispielhaft im Inneren des Winkeleinstellelements 672 angeordnet und bevorzugt radial allseits gleichmäßig zu diesem beabstandet positioniert.

Die Vorsatzschnittstelle 602 dient zur herstellbaren und lösbaren Befestigung des Schlagwerkvorsatzes 600 an einer zugeordneten Handwerkzeugmaschine, z.B. der Handwerkzeugmaschine 100 von Fig. 1, bzw. deren Maschinenschnittstelle 550 von Fig. 2, und weist illustrativ eine Winkelpositionseinstelleinheit 670 auf, der das Winkeleinstellelement 672 zugeordnet ist, sowie eine Verriegelungseinheit 669. Die Verriegelungseinheit 669 ist dazu ausgebildet, in einem Verriegelungszustand den Werkzeugvorsatz 600 zum Betrieb an der Handwerkzeugmaschine in einer vorgegebenen Winkelposition an dieser zu verriegeln und in einem Entriegelungszustand ein Abziehen des Schlagwerkvorsatzes 600 von der Handwerkzeugmaschine zu ermöglichen. Die Winkelpositionseinstelleinheit 670 ist dazu ausgebildet, eine Einstellung der vorgegebenen Winkelposition des Schlagwerkvorsatzes 600 zum Betrieb an der Handwerkzeugmaschine zu ermöglichen. Hierbei ist die Winkelpositionseinstelleinheit 670 vorzugsweise im Verriegelungszustand der Verriegelungseinheit 669 betätigbar, um eine Änderung der vorgegebenen Winkelposition zu ermöglichen. Eine derartige Betätigung zur Änderung der vorgegebenen Winkelposition erfolgt bevorzugt durch eine kombinierte Längs- und Drehbewegung des Vorsatzgehäuses 610.

Die Verriegelungseinheit 669 weist einen Verriegelungskörper 632 und einen drehbeweglich in diesem gelagerten, federbeaufschlagten Zentrierkörper 681 auf. Dieser Zentrierkörper 681 ist über geeignete Befestigungselemente 683, z.B. Schrauben, an einem axialen Endkragen 605 des Winkeleinstellelements 672 verdrehgesichert befestigt, in dem das Lagerelement 677 angeordnet ist. An einem vom Antriebsabschnitt 604 abgewandten axialen Ende des Zentrierkörpers 681 hat dieser mindestens ein Zentrierglied 631, das z.B. mindestens zwei bogenförmige, in Längsrichtung des Schlagwerkvorsatzes 600, d.h. entgegen der Richtung 601, abgeschrägte Zentrierbereiche 676, 678 aufweist. Es wird jedoch darauf hingewiesen, dass das Zentrierglied 631 lediglich beispielhaft die beiden Zentrierbereiche 676, 678 aufweist und nicht zur Einschränkung der Erfindung. Das Zentrierglied 631 kann vielmehr auch einen einzelnen, nach Art eines Kegelstumpfs ausgebildeten Zentrierbereich aufweisen.

Der Verriegelungskörper 632 hat bevorzugt mindestens zwei Verriegelungselemente 666, 668, die beispielhaft nach Art von Bajonetten zur Ausbildung einer Bajonett-Verbindung ausgebildet sind. Des Weiteren ist am Außenumfang dieses Verriegelungskörpers 632 exemplarisch ein Betätigungsring 664 angeordnet, der zur Verriegelung des Verriegelungskörpers 632 an der Handwerkzeugmaschine betätigbar ist, wobei der Verriegelungskörper 632 und der Betätigungsring 664 einstückig ausgebildet sein können.

Im Bereich zwischen dem Verriegelungskörper 632 und dem Betätigungsring 664 ist bevorzugt ein optionales, zumindest bereichsweise federndes Sperr- und Blockierglied 607 angeordnet. Dieses ist zumindest abschnittsweise am Verriegelungskörper 632 und/oder dem Betätigungsring 664 lagefixiert und dazu ausgebildet, im Verriegelungszustand der Verriegelungseinheit 669 eine Verdrehung des Verriegelungskörpers 632 von seiner Verriegelungsstellung in seine Entriegelungsstellung zu verhindern, wobei das Sperr- und Blockierglied 607 bevorzugt mit dem der Maschinenschnittstelle 550 von Fig. 2 zugeordneten Sperrelement 555 von Fig. 2 zusammenwirkt. Hierbei ist der Betätigungsring 664 bevorzugt dazu ausgebildet, das Sperr- und Blockierglied 607 im Verriegelungszustand der Verriegelungseinheit 669 zumindest abschnittsweise gegen die Maschinenschnittstelle 550 von Fig. 2 zu beaufschlagen. Das Sperr- und Blockierglied 607 ist hierbei dazu ausgebildet, den Betätigungsring 664 im Verriegelungszustand der Verriegelungseinheit 669 in einer Blockierstellung am Verriegelungskörper 632 zu blockieren, um eine selbsttätige Verdrehung bzw. ein Lösen des Betätigungsrings 664 relativ zum Verriegelungskörper 632 zu verhindern.

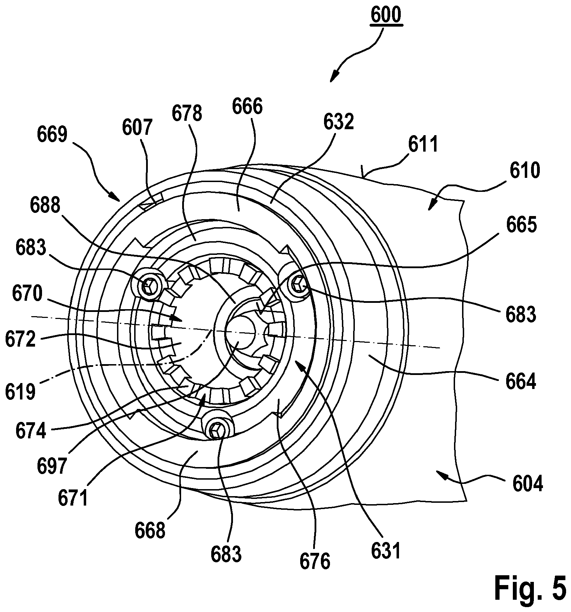

Fig. 5 zeigt den Werkzeugvorsatz 600, der verfügt über die Verriegelungseinheit 669 verfügt, die mittels des Betätigungsrings 664 vom Benutzer zur Arretierung an der Maschinenschnittstelle 550 von Fig. 2 verdrehbar ist. Zu diesem Zweck verfügt die Verriegelungseinheit 669 über den näherungsweise ringförmigen Verriegelungskörper 632, an dem die zwei diametral angeordneten, jeweils nach Art von Bajonetten ausgebildeten Verriegelungselemente 666, 668 ausgebildet sind. Der mittels des Betätigungsrings 664 rotierbare Verriegelungskörper 632 ist hierbei konzentrisch zu der Drehachse 619 des Antriebsglieds 697 angeordnet.

Wie oben beschrieben verfügt das Antriebsglied 697 des Werkzeugvorsatzes 600 bevorzugt über einen sechskantigen Außenumfang 665 zur Herstellung einer drehfesten, jedoch axial beweglichen Formschlussverbindung mit der Werkzeugaufnahme 140 der Maschinenschnittstelle 550 von Fig. 2. An dem Vorsatzgehäuse 610 ist zur Optimierung des Bedienungskomforts bevorzugt zumindest im Bereich der Antriebseinheit 604 der gummierte Griffbereich 611 ausgebildet.

## Patentansprüche

1. Werkzeugvorsatz (600) für eine Handwerkzeugmaschine (100), die ein Werkzeuggehäuse (105) mit einer Befestigungsschnittstelle (550) aufweist, mit einem Vorsatzgehäuse (610), an dem eine Verriegelungseinheit (669) zur Verriegelung des Werkzeugvorsatzes (600) an der Befestigungsschnittstelle (550) der Handwerkzeugmaschine (100) und eine Werkzeugaufnahme (606) zur Aufnahme eines Einsatzwerkzeugs (150) angeordnet sind, wobei in dem Vorsatzgehäuse (610) ein Schlagwerk (640) angeordnet ist, das dazu ausgebildet ist, ein in der Werkzeugaufnahme (606) angeordnetes Einsatzwerkzeug (150) im Schlagbetrieb des Werkzeugvorsatzes (600) mit in axialer Richtung zur Werkzeugaufnahme (606) ausgeführten Schlägen zu beaufschlagen, wobei die Werkzeugaufnahme (606) zumindest im Schlagbetrieb verdrehgesichert im Vorsatzgehäuse (610) lagefixiert ist, **dadurch gekennzeichnet, dass** die Werkzeugaufnahme (606) ein um eine zugeordnete Drehachse (619) drehbares Abtriebsglied (698) aufweist, wobei die Drehachse (619) mit einer Antriebsachse (618) des Schlagwerks (640) zusammenfällt, und das Abtriebsglied (698) einen Führungsabschnitt (652) aufweist, der zumindest abschnittsweise von einem dem Vorsatzgehäuse (610) zugeordneten Werkzeugaufnahmehalter (655) umschlossen ist, wobei zwischen dem Führungsabschnitt (652) und dem Werkzeugaufnahmehalter (655) zumindest abschnittsweise eine Eingriffskontur (657) zur Schaffung einer drehfesten Kopplung zwischen dem Werkzeugaufnahmehalter (655) und dem Führungsabschnitt (652) zumindest im Schlagbetrieb des Werkzeugvorsatzes (600) vorgesehen ist.

2. Werkzeugvorsatz nach Anspruch 1, **dadurch gekennzeichnet, dass** dem Schlagwerk (640) ein koaxial zur Werkzeugaufnahme (606) angeordnetes Antriebsglied (697) zugeordnet ist.

3. Werkzeugvorsatz nach Anspruch 2, **dadurch gekennzeichnet, dass** das Antriebsglied (697) zumindest abschnittsweise einen sechskantigen Außenumfang (665) aufweist.

4. Werkzeugvorsatz nach einem der vorhergehenden Ansprüche, **dadurch gekennzeichnet, dass** das Schlagwerk (640) zum unmittelbar schlagenden Antrieb des der Werkzeugaufnahme (606) zugeordneten Abtriebsglieds (698) im Schlagbetrieb des Werkzeugvorsatzes (600) ausgebildet ist, wobei das Abtriebsglied (698) dazu ausgebildet ist, in axialer Richtung zur Werkzeugaufnahme (606) ausgeführte Schläge unmittelbar auf ein in der Werkzeugaufnahme (606) angeordnetes Einsatzwerkzeug (150) zu übertragen.

5. Werkzeugvorsatz nach einem der vorhergehenden Ansprüche, **dadurch gekennzeichnet, dass** das Schlagwerk (640) einen mit einem Federelement (642) federbeaufschlagten Schlagkörper (641) aufweist, der über eine Kugelführung (680) mit einem zugeordneten Federspannglied (646) gekoppelt ist.

6. Werkzeugvorsatz nach einem der vorhergehenden Ansprüche, **dadurch gekennzeichnet, dass** das Schlagwerk (640) eine betätigbare Einrückkupplung (620) zur Aktivierung des Schlagbetriebs des Schlagwerks (640) aufweist.

7. Werkzeugvorsatz nach einem der vorhergehenden Ansprüche, **dadurch gekennzeichnet, dass** das Abtriebsglied (698) mittels eines Federglieds (699) in einer von der Verriegelungseinheit (669) wegweisenden Richtung axial vorgespannt ist.

8. Werkzeugvorsatz nach Anspruch 6 und 7, **dadurch gekennzeichnet, dass** die Einrückkupplung (620) dazu ausgebildet ist, bei einer Betätigung entgegen der vom Federglied (699) ausgeübten Kraftwirkung einen Antrieb des Federspannglieds (646) zum periodischen Spannen und Freigeben des Federelements (642) zu ermöglichen.

9. Werkzeugvorsatz nach einem der vorhergehenden Ansprüche, **dadurch gekennzeichnet, dass** das Schlagwerk (640) einen mit einem Federelement (642) federbeaufschlagten Schlagkörper (641) aufweist, der mit einem zugeordneten Federspannglied (646) gekoppelt ist, wobei in dem Vorsatzgehäuse (610) ein Getriebe (700) angeordnet ist, das dazu ausgebildet ist, eine Drehzahl des Federspannglieds (646) in Relation zu einer Drehzahl des Antriebsglieds (697) zu erhöhen.

10. Werkzeugvorsatz nach einem der vorhergehenden Ansprüche, **dadurch gekennzeichnet, dass** an dem Vorsatzgehäuse (610) ein Zusatzhandgriff (350) und/oder eine Befestigungshilfe (352) befestigbar ist.

11. Werkzeugvorsatz nach einem der vorhergehenden Ansprüche, **dadurch gekennzeichnet, dass** die Werkzeugaufnahme (606) zur Aufnahme von SDS-plus-, SDS-Quick- und/oder HEX-Einsatzwerkzeugen ausgebildet ist.

12. Werkzeugvorsatz nach einem der vorhergehenden Ansprüche, **dadurch gekennzeichnet, dass** das Einsatzwerkzeug (150) als ein Meißel ausgebildet ist.

13. Werkzeugsystem mit einer Handwerkzeugmaschine (100), die ein Werkzeuggehäuse (105) mit einer Befestigungsschnittstelle (550) aufweist, und mit einem austauschbaren Werkzeugvorsatz (600) nach einem der Ansprüche 1 bis 12.

## Claims

1. Tool attachment (600) for a portable power tool (100) that has a tool housing (105) with a fastening interface (550), having an attachment housing (610), at which a locking unit (669) for locking the tool attachment (600) at the fastening interface (550) of the portable power tool (100) and a tool receptacle (606) for receiving an application tool (150) are arranged, wherein a percussion mechanism (640) is arranged in the attachment housing (610), said percussion mechanism (640) being configured to subject an application tool (150) arranged in the tool receptacle (606) to impacts executed in an axial direction with respect to the tool receptacle (606) during percussive operation of the tool attachment (600), wherein the tool receptacle (606) is positionally fixed so as to be unable to twist in the attachment housing (610) at least during percussive operation, **characterized in that** the tool receptacle (606) has an output member (698) that is rotatable about an associated axis of rotation (619), wherein the axis of rotation (619) coincides with a drive axis (618) of the percussion mechanism (640), and the output member (698) has a guide portion (652) which is enclosed at least sectionally by a tool receptacle holder (655) assigned to the attachment housing (610), wherein, between the guide portion (652) and the tool receptacle holder (655), an engagement contour (657) for creating a rotationally fixed coupling between the tool receptacle holder (655) and the guide portion (652) at least during percussive operation of the tool attachment (600) is at least sectionally provided.

2. Tool attachment according to Claim 1, **characterized in that** the percussion mechanism (640) is assigned a drive member (697) arranged coaxially with the tool receptacle (606).

3. Tool attachment according to Claim 2, **characterized in that** the drive member (697) at least sectionally has a hexagonal outer periphery (665).

4. Tool attachment according to one of the preceding claims, **characterized in that** the percussion mechanism (640) is configured for the immediate percussive driving of the output member (698) assigned to the tool receptacle (606) during percussive operation of the tool attachment (600), wherein the output member (698) is configured to transmit impacts executed in an axial direction with respect to the tool receptacle (606) directly to an application tool (150) arranged in the tool receptacle (606).

5. Tool attachment according to one of the preceding claims, **characterized in that** the percussion mechanism (640) has an impact body (641) that is spring-loaded by a spring element (642) and is coupled to an associated spring tensioning member (646) via a ball guide (680).

6. Tool attachment according to one of the preceding claims, **characterized in that** the percussion mechanism (640) has an actuable engagement clutch (620) for activating the percussive operation of the percussion mechanism (640).

7. Tool attachment according to one of the preceding claims, **characterized in that** the output member (698) is axially preloaded by means of a spring member (699) in a direction away from the locking unit (669).

8. Tool attachment according to Claims 6 and 7, **characterized in that** the engagement clutch (620) is configured, upon actuation counter to the force action exerted by the spring member (699), to allow the spring tensioning member (646) to be driven to periodically tension and release the spring element (642).

9. Tool attachment according to one of the preceding claims, **characterized in that** the percussion mechanism (640) has an impact body (641) that is spring-loaded by a spring element (642) and is coupled to an associated spring tensioning member (646), wherein a transmission (700) is arranged in the attachment housing (610), said transmission (700) being configured to increase a rotational speed of the spring tensioning member (646) in relation to a rotational speed of the drive member (697).

10. Tool attachment according to one of the preceding claims, **characterized in that** an auxiliary handle (350) and/or a fastening aid (352) is fastenable to the attachment housing (610).

11. Tool attachment according to one of the preceding claims, **characterized in that** the tool receptacle (606) is configured to receive SDS-plus, SDS-quick and/or HEX application tools.

12. Tool attachment according to one of the preceding claims, **characterized in that** the application tool (150) is in the form of a drill bit.

13. Tool system having a portable power tool (100) that has a tool housing (105) with a fastening interface (550), and having an interchangeable tool attachment (600) according to one of Claims 1 to 12.

## Revendications

1. Adaptateur d'outil (600) pour une machine-outil portative (100) qui comprend un boîtier d'outil (105) doté d'une interface de fixation (550), l'adaptateur d'outil comprenant un boîtier d'adaptateur (610) sur lequel sont disposés une unité de verrouillage (669) servant à verrouiller l'adaptateur d'outil (600) sur l'interface de fixation (550) de la machine-outil portative (100) et un logement d'outil (606) servant à loger un outil d'insertion (150), un mécanisme de percussion (640) étant disposé dans le boîtier d'adaptateur (610), lequel mécanisme de percussion est conçu pour, en mode de percussion de l'adaptateur d'outil (600), solliciter un outil d'insertion (150) disposé dans le logement d'outil (606) avec des percussions effectuées dans la direction axiale par rapport au logement d'outil (606), le logement d'outil (606) étant fixé en position de manière bloquée en rotation dans le boîtier d'adaptateur (610) au moins en mode de percussion, **caractérisé en ce que** le logement d'outil (606) comprend un élément de sortie (698) pouvant tourner autour d'un axe de rotation (619) associé, l'axe de rotation (619) coïncidant avec un axe d'entraînement (618) du mécanisme de percussion (640), et l'élément de sortie (698) comprenant une partie de guidage (652) qui est entourée au moins dans certaines zones par un support de logement d'outil (655) associé au boîtier d'adaptateur (610), au moins un contour d'engagement (657) étant prévu au moins dans certaines zones entre la partie de guidage (652) et le support de logement d'outil (655), lequel contour d'engagement sert à produire un accouplement bloqué en rotation entre le support de logement d'outil (655) et la partie de guidage (652) au moins en mode de percussion de l'adaptateur d'outil (600).

2. Adaptateur d'outil selon la revendication 1, **caractérisé en ce qu'**un élément d'entraînement (697) disposé de manière coaxiale au logement d'outil (606) est associé au mécanisme de percussion (640).

3. Adaptateur d'outil selon la revendication 2, **caractérisé en ce que** l'élément d'entraînement (697) présente, au moins dans certaines zones, une périphérie extérieure hexagonale (665).

4. Adaptateur d'outil selon l'une quelconque des revendications précédentes, **caractérisé en ce que** le mécanisme de percussion (640) est conçu pour, en mode de percussion de l'adaptateur d'outil (600), entraîner directement en percussion l'élément de sortie (698) associé au logement d'outil (606), l'élément de sortie (698) étant conçu pour transmettre des percussions effectuées dans la direction axiale par rapport au logement d'outil (606) directement à un outil d'insertion (150) disposé dans le logement d'outil (606).

5. Adaptateur d'outil selon l'une quelconque des revendications précédentes, **caractérisé en ce que** le mécanisme de percussion (640) comprend un corps de percussion (641) sollicité par un élément ressort (642), lequel corps de percussion est accouplé à un élément de tension de ressort (646) associé par le biais d'un guide de bille (680).

6. Adaptateur d'outil selon l'une quelconque des revendications précédentes, **caractérisé en ce que** le mécanisme de percussion (640) comprend un embrayage d'engagement (620) pouvant être actionné et servant à activer le mode de percussion du mécanisme de percussion (640).

7. Adaptateur d'outil selon l'une quelconque des revendications précédentes, **caractérisé en ce que** l'élément de sortie (698) est précontraint axialement, au moyen d'un élément ressort (699), dans un sens opposé à l'unité de verrouillage (669).

8. Adaptateur d'outil selon les revendications 6 et 7, **caractérisé en ce que** l'embrayage d'engagement (620) est conçu pour, lors d'un actionnement à l'encontre de l'action de force exercée par l'élément ressort (699), permettre un entraînement de l'élément de tension de ressort (646) pour tendre et relâcher périodiquement l'élément ressort (642).

9. Adaptateur d'outil selon l'une quelconque des revendications précédentes, **caractérisé en ce que** le mécanisme de percussion (640) comprend un corps de percussion (641) sollicité par un élément ressort (642), lequel corps de percussion est accouplé à un élément de tension de ressort (646) associé, une transmission (700) étant disposée dans le boîtier d'adaptateur (610), laquelle est conçue pour augmenter une vitesse de rotation de l'élément de tension de ressort (646) par rapport à une vitesse de rotation de l'élément d'entraînement (697).

10. Adaptateur d'outil selon l'une quelconque des revendications précédentes, **caractérisé en ce qu'**une poignée supplémentaire (350) et/ou un auxiliaire de fixation (352) peuvent être fixés au boîtier d'adaptateur (610).

11. Adaptateur d'outil selon l'une quelconque des revendications précédentes, **caractérisé en ce que** le logement d'outil (606) est conçu pour loger des outils d'insertion SDS-plus, SDS-Quick et/ou HEX.

12. Adaptateur d'outil selon l'une quelconque des revendications précédentes, **caractérisé en ce que** l'outil d'insertion (150) est réalisé sous forme de burin.

13. Système d'outil comprenant une machine-outil portative (100) qui comprend un boîtier d'outil (105) doté d'une interface de fixation (550), et comprenant un adaptateur d'outil (600) interchangeable selon l'une quelconque des revendications 1 à 12.
